# FASCICULE DE BREVET EUROPEEN

(11) **EP 1 869 545 B1**
(45) Date de publication et mention de la délivrance du brevet: **27.04.2011**
(21) Numéro de dépôt: 06725481.3
(22) Date de dépôt: 31.03.2006
(51) Int. Cl.: G06F 7/72

(54) **DISPOSITIF IMPLEMENTANT LA MULTIPLICATION MODULAIRE DE MONTGOMERY**
MODULARE MONTGOMERY-MULTIPLIKATIONSEINRICHTUNG
MONTGOMERY MODULAR MULTIPLICATION DEVICE

(30) Priorité: 01.04.2005 FR 0503178
(43) Date de publication de la demande: 26.12.2007
(73) Titulaire: THALES, 92200 Neuilly sur Seine (FR)
(72) Inventeur: BERNARD, Florent, 77185 Lognes (FR); SAUZET, Alain, 91070 Bondoufle (FR); GARRIDO, Eric, 95230 Soisy/Montmorency (FR)
(74) Mandataire: Dudouit, Isabelle
(86) Numéro de dépôt international: PCT/EP2006/061235
(87) Numéro de publication internationale: WO 2006/103288

(56) Documents cités:
- US-A- 5 133 069
- US-A1- 2002 194 237
- US-A1- 2005 033 790

## Description

L'invention concerne une méthode et un dispositif pour exécuter une multiplication modulaire de Montgomery.

Elle est notamment utilisée dans le domaine de la cryptologie, dans des circuits intégrés de type FPGA (Field Programmable Gâte Array) ou ASIC (Application Specific Integrated Circuit). La multiplication modulaire est traitée sur un anneau modulaire (Z/NZ) ou sur un corps (Z/pZ) avec p nombre premier.

Dans la description, on définit la fréquence de fonctionnement d'un multiplieur-additionneur pipeliné à p étages donnée par l'inverse du temps de traversée d'un seul des étages du multiplieur-additionneur.

Dans la description, on définit le terme « pipeline » comme une opération consistant à rajouter des barrières de registres entre les phases logiques et l'architecture en résultant.

La multiplication modulaire est au coeur de nombreux crypto systèmes à clé publique (RSA, ECDSA).

Les opérations de chiffrement et de signature présentent des contraintes différentes qui requièrent notamment une architecture rapide, flexible et peu coûteuse en ressources matérielles.

Deux niveaux de flexibilité sont ainsi définis :
- Le premier niveau se situe avant la synthèse de l'architecture. La conception de l'architecture doit comporter suffisamment de degrés de liberté pour pouvoir satisfaire des contraintes matérielles/temporelles données.
- Le deuxième niveau se situe après la synthèse de l'architecture.

L'architecture doit être capable de traiter différentes tailles de données afin de pouvoir effectuer aussi bien des opérations de type ECDSA (Elliptique Curve Digital Signature Algorithm) taille 256-512 bits que des opérations de type RSA (du nom de ses inventeurs : Rivest, Shamir, Adleman) taille 1024-4096 bits.

Pour évaluer les performances d'une architecture, le produit temps*surface est utilisé. Le temps est donné en nombre de cycle horloge. La surface est estimée en terme de nombre de portes Nand équivalentes (ASIC) ou en terme de cellules élémentaires (LC (Logic Cell) ou CLB (Configuration Logic Bloc), blocs combinatoires séquentiels, pour FPGA ou field-programmable gâte arrays).

L'art antérieur décrit différents exemples de dispositif et de méthode utilisant la multiplication modulaire en cryptographie asymétrique.

Les implémentations les plus fréquentes de la multiplication modulaire sont de type systolique et utilisent l'algorithme de Montgomery. De nombreuses publications traitent de ces implémentations. La référence dans ce domaine étant due à Péter Komerup, A systolic, linear-array for a class of right-shift algorithms, IEEE Transactions on Computers 43 (1994), no. 8, 892-898.

L'implémentation de la multiplication modulaire peut aussi se faire selon l'algorithme de Barret , Johann Groβschadl, High speed RSA Hardware based on Barret's modular réduction method, CHES'00, 2000.

Ce dernier type d'implémentation, bien que performant, présente l'inconvénient de ne pas être flexible, car elle est définie sur une taille donnée et ne peut traiter des opérations de tailles supérieures.

Des représentations de nombre « exotiques » (c'est-à-dire non conventionnelles, comme par exemple la représentation RNS (Residue Number System)) sont également utilisées pour paralléliser l'implémentation de la multiplication modulaire, par exemple, L-S Didier, J-C Bajard and P. Komerup, An RNS Montgomery multiplication Algorithm, Proceedings of ARITH13, IEEE Computer Society, 1997, pp. 234-239. Cette solution requiert toutefois d'importantes ressources matérielles et ne résout pas le problème de flexibilité.

Il est aussi connu des dispositifs présentant des architectures flexibles, ou « scalable hardware ». La première publication d'une telle architecture est due à Alexandre F. Tenca and Cetin K. Koç, A scalable architecture for Montgomery multiplication, CHES'99, 1999.

D'autres publications plus récentes, reprennent l'idée développée dans cet article et proposent des améliorations et des extensions. C'est le cas de :
- Alexandre F. Tenca and Cetin K. Koç, A scalable architecture for Modular Multiplication based on Montgomery's Algorithm, IEEE Transactions on computers 52 (2003), no 9.
- Alexandre F. Tenca, Cetin K. Koç and Erkay Savas, A scalable and unified multiplier architecture for finite field GF(p) and GF(2n), CHES'00, 2000.
- Alexandre F. Tenca, Georgi Todorov and Cetin K. Koç, High-Radix Design of a scalable modular multiplier, CHES'01, vol. LNCS 2162, 2001, pp. 185-201.
- Gunnar Gaubatz, Versatile Montgomery Multiplier Architectures, Ph.D. thesis, Worcester Polytechnic Institute, April 2002.

Ces architectures sont basées sur le cablage de petites cellules élémentaires composées d'un additionneur et d'un multiplieur. Ces dispositifs répondent au problème de flexibilité. Toutefois, ces structures impliquent le choix d'une taille de bus interne faible. Le nombre de cycles pour réaliser une multiplication modulaire est donc élevé.

Le document US-A-2005/033790 divulgue un dispositif de structure pipeline pour la mise en oeuvre de la multiplication modulaire de Montgomery en base supérieure ou égal à 4 comprenant un certain nombre d'étages multiplieur-accumulateur et un étage additionneur.

Le document US-A-5 133 069 divulgue une technique permettant d'améliorer la vitesse de fonctionnement d'une multiplieur parallèle en introduisant des registres pipelines entre les circuits logiques. Dans ce document, le nombre d'étages de circuits logiques placés entre 2 registres pipelines est déterminé en fonction du délai d'exécution (de ce nombre d'étages logiques puisque l'on connaît le délai d'exécution de chaque étage de circuits logiques) par rapport à un temps de cycle prédéterminé.

Avant d'expliciter le dispositif selon l'invention quelques rappels concernant l'algorithme de Montgomery sont donnés.

L'algorithme de Montgomery utilisé est le suivant :

MMₙS(A,B,N)

S← a₀B

Pour i de 1 à n faire

mᵢ ← S₀N' mod r

S ←aᵢB+(mᵢN+S)/r

mₙ₊₁ ← S₀N' mod r

S ←(mₙ₊₁N+S)/r

Retourne S

L'étape S ←aᵢB+(mᵢN+S)/r est la plus coûteuse d'un point de vu temps de calcul. On peut remarquer que cette étape est obtenue en faisant deux fois la même opération : chiffre×entier long+entier long → entier long (xᵢY+Z → Z). Cette étape est réalisée en faisant une boucle sur les chiffres des deux entiers longs (Y et Z).

On distingue cependant deux cas, selon que le décalage est effectué ou non.

### La multiplication classique : aᵢB+T→S (1)

Cette multiplication-addition est réalisée par la boucle suivante :

c=0

Pour j allant de 0 à n faire :

P ← aᵢbⱼ+tⱼ+c

sⱼ ← LSB(P)

c ← MSB(P)

sₙ₊₁=c

Pour l'itération j=n, bⱼ≤1, donc P≤ 3(r-1) = 2r+r-3, ce qui implique MSB(P) ≤ 2. On en déduit que sₙ₊₁ ≤ 2.

### Remarque :

L'opération de base est x×y+z+c avec x, y, z et c compris entre 0 et r-1. Le résultat est donc compris entre 0 et r²-1, représentable par deux chiffres.

### La multiplication et décalage : (mᵢN+S/r) → T (2)

Dans le cas particulier de la division par r (décalage à droite), la boucle est la même que ci-dessus, avec un décalage d'indice au niveau de la sortie T.

En effet, la détermination de mᵢ rend la quantité P=mᵢ×N₀+s₀ divisible par r. Dans ce cas là, on est assuré que LSB(P) est nul. On "perd" donc volontairement cette première valeur (indice -1) la première valeur significative (t₀) étant obtenue à l'itération suivante (j=1).

Du fait du décalage d'indice, la dernière itération (j=n) donnera accès à la valeur tₙ₋₁. La valeur tₙ sera donc obtenue en ajoutant c=MSB(P) de l'itération j=n avec sₙ₊₁.

La boucle est donc la suivante :

c=0

Pour j allant de 0 à n faire :

P ← mᵢnⱼ+sⱼ+c

tⱼ₋₁ ← LSB(P)

c ← MSB(P)

tₙ=c+sₙ₊₁

Pour l'itération j=n, Nⱼ=0, donc P≤ 2(r-1) = r+r-2, ce qui implique MSB(P)≤ 1. On en déduit que tₙ ≤ 3.

Comme r ≥ 4, on en déduit que T est bien représenté par n+1 chiffres.

La présente invention repose sur une nouvelle approche qui considère notamment, en fonctionnement normal, une cellule unique de taille plus importante que les cellules considérées dans l'art antérieur et un processus d'itération sur elle-même en utilisant un algorithme de Montgomery en base élevée. C'est-à-dire que dans la suite, la base r est supposée plus grande ou égale à 4. En pratique la base r correspond le plus souvent à 2³² ou à 2⁶⁴, ce qui justifie la dénomination de base élevée.

L'invention concerne un dispositif de mise en oeuvre de la multiplication modulaire de Montgomery caractérisé en ce qu'il comporte au moins une cellule de calcul comportant un multiplieur-additionneur comportant p couples logique-registre pipeliné, recevant plusieurs chiffres à additionner et à multiplier, au moins deux sorties correspondant au poids faible et au poids fort, un additionneur recevant les deux sorties du multiplieur-additionneur, le nombre p étant choisi de façon telle que la fréquence maximale du multiplieur-additionneur soit supérieure ou égale à la fréquence maximale de l'additionneur et en ce que ledit dispositif comporte un multiplieur partie basse dont les entrées correspondent à la sortie LSB de l'additionneur et à une constante précalculée, ledit multiplieur étant pipeliné sur une profondeur k, avec k<p, et dont la sortie est couplé avec une des entrées du multiplieur-additionneur.

L'invention présente notamment les avantages suivants : l'utilisation d'une base plus élevée réduit le nombre de cycles nécessaires au calcul d'une multiplication modulaire. Une seule cellule élémentaire est alors utilisée. Le produit temps surface de cette architecture est donc amélioré.

D'autres caractéristiques et avantages de la présente invention apparaîtront mieux à la lecture de la description qui suit d'un exemple de réalisation donné à titre illustratif et nullement limitatif annexé des figures qui représentent :
- La figure 1 un exemple d'agencement des composants élémentaires d'une cellule multiplieur-additionneur selon l'invention,
- La figure 2 un exemple d'agencement des composants constituant le coeur du multiplieur modulaire de Montgomery.

L'idée mise en oeuvre dans le multiplieur selon l'invention consiste notamment à scinder l'opération x×y+z+c en (x×y+z)+c, en pipelinant l'opération de multiplication-addition (x×y+z) et en ajoutant, à mesure que les résultats sont obtenus, la variable c, où x,y et z sont les données, c étant le chiffre de poids fort provenant de l'itération précédente.

### Pipeline

Le pipeline consiste à rajouter des barrières de registres entre les phases logiques afin de réduire le chemin critique, et ainsi d'augmenter la fréquence maximale de fonctionnement (théoriquement celle d'un additionneur en base r).

On définit la profondeur de pipeline d'un composant élémentaire par son nombre de registres internes. On ne compte pas le registre de sortie. Implémentation de la multiplication-addition

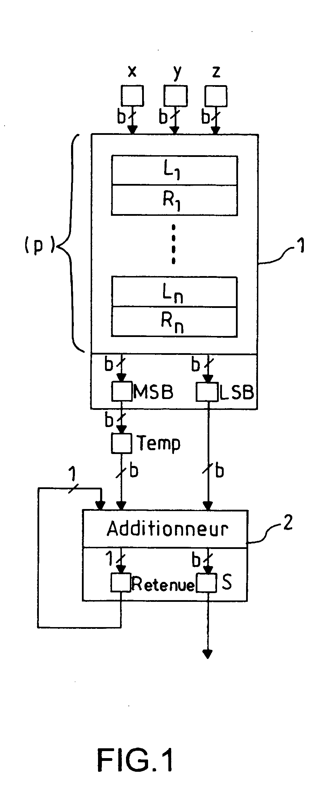

L'exemple donné à la figure 1 suppose que l'on dispose d'un multiplieur-additionneur 1 pipeliné, de profondeur p.

Il comporte notamment un ensemble de couples logique-registre (li, ri). Le nombre p de ces couples est notamment choisi pour que la fréquence maximale F1max du multiplieur-additionneur pipeliné soit supérieure ou égale à la fréquence maximale F2max de l'additionneur, les valeurs de ces deux fréquences étant les plus proches possibles.

La fréquence maximale de fonctionnement du multiplieur-additionneur est donnée par l'inverse du temps d'exécution de l'opération de multiplication-addition, alors que la fréquence maximale de fonctionnement du multiplieur-additionneur pipeliné est donné par l'inverse du temps d'exécution d'un seul des p étages. Pour un fonctionnement optimal, on détermine la fréquence maximale de l'additionneur, ce qui donne le temps d'exécution de l'additionneur et on découpe le multiplieur-additionneur en p étages de temps de traversée inférieur ou égal, mais le plus proche possible, au temps d'exécution de l'additionneur.

Les entrées du multiplieur-additionneur 1 correspondent à trois chiffres : x,y et z et la sortie est un couple de chiffres correspondant à LSB(x×y+z) et MSB(x×y+z). La sortie tient sur deux chiffres.

Les résultats du multiplieur-additionneur sont transmis à un additionneur trois entrées, référencé 2 : chiffre+chiffre+carry → chiffre+carry, fonctionnant en 1 cycle (pipeline 0) à la fréquence F2max.

Dans la suite on désignera par b la taille du bus interne (l'hypothèse qui est faite est : b ≥ 2 pour satisfaire r ≥ 4), (r=2^{b}).

Le registre Temp correspond au stockage de c nécessaire au calcul suivant : addition de c avec le LSB suivant et la retenue précédente.

Les données (chiffres de x×Y +Z) sortent donc en série à chaque cycle, chiffre de poids faible en tête, dans le même sens que la propagation de la retenue.

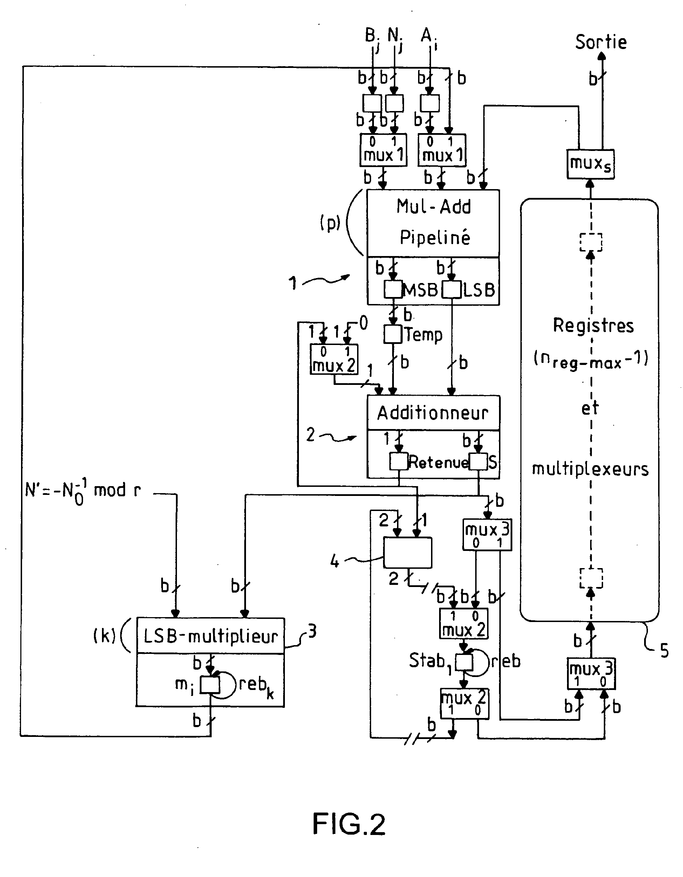

La figure 2 décrit un exemple d'agencement du composant de la figure 1, avec un dispositif 3 adapté à la partie basse de la multiplication, et un dispositif 5 composé de registres et de multiplexeurs.

Dans cet exemple, les principaux composants du circuit sont : un multiplieur-additionneur 1 pipeliné, un additionneur 3 entrées, référencé 2, un multiplieur partie basse 3 et un additionneur 2 bits + 1 bit vers 2 bits, désigné 4. Une barrière de n_{reg-max}-1 registres et de multiplexeurs, désigné 5.

Le nombre de multiplexeurs et de registres dépend notamment des données intrinsèques au circuit, les profondeurs de pipeline p et k, ainsi que du nombre de chiffres des données.

Dans l'exemple de la figure 2, la barrière de n_{reg-max}-1 registres et de multiplexeurs (composant référencé 5) a notamment pour fonction de retarder l'arrivée des données dans le multiplieur-additionneur 1.

### Multiplication partie basse - composant 3

Dans la boucle principale de l'algorithme, à chaque itération, on détermine mᵢ, le chiffre qui rend la quantité S+mᵢN divisible par r.

mᵢ est déterminé en effectuant une multiplication partielle du chiffre de poids faible de S avec une constante N', précalculée une fois pour toute pour un module N donné. Dans cette multiplication, seule la partie basse nous intéresse : on effectue cette opération modulor.

Cette opération étant plus lente qu'une addition, elle est également pipeliné. On appelle k la profondeur de pipeline de cet opérateur et on suppose k<p.

### Rebouclage, latence et registres supplémentaires

Deux cas sont distingués, le passage de la multiplication classique aᵢB+T → S, (1), à la multiplication et décalage (mᵢ×N+S)/r → T, (2), et le passage de (2) à (1), le retard n'étant pas le même.

Ce retard détermine notamment le nombre de registres à utiliser : n'_{reg} ou n_{regk} selon les cas. Ainsi par exemple, dans le passage de (2) à (1), et dans le cas où p+2 ≤ n (cas où n'_{reg} est défini), le nombre de registres à utiliser est n'_{reg}. Comme il y en a n_{reg-max} -1, il faut en sauter n_{reg-max} -1- n'_{reg}. Ceci est fait grâce aux multiplexeurs, placés en conséquence.

### Passage de (1) à (2)

Pour pouvoir chaîner sans perte de temps (ie : sans rajouter de latence) les multiplications-additions (1) et (2), il convient de déterminer mᵢ avant d'avoir parcouru la totalité des chiffres de la multiplication en cours.

Il est donc souhaitable de réaliser la condition : p+k+2 ≤ n.

En effet, le chiffre de poids faible du résultat de la multiplication-addition est disponible lorsque le chiffre d'indice p+1 se présente à l'entrée du multiplieur-additionneur.

Au cycle suivant, l'addition est réalisée. S₀ est disponible, le calcul de mᵢ peut donc débuter.

Après k+1 coups d'horloge supplémentaires, mᵢ est disponible en sortie du multiplieur partie basse. Il peut donc être utilisé comme entrée du multiplieur-additionneur au coup d'horloge suivant. Ceci explique la condition p+k+2 ≤ n.

### Rebouclage

Si on veut chaîner les multiplications-additions (1) et (2), sans perte de temps, on choisit p+k+2 ≤ n.

Dans ce cas, la donnée mᵢ est disponible avant la fin de parcours des chiffres de la multiplication-addition en cours. On reboucle donc cette valeur, afin de retarder son entrée dans le multiplieur-additionneur. On définit alors n_{rebk}=n-p-k-2 qui correspond au nombre de rebouclage nécessaire de cette valeur.

Dans le cas particulier où n_{rebk}=0, la donnée mᵢ est synchrone avec les nouvelles entrées du multiplieur-additionneur.

Cependant, dans tous les cas, on reboucle la valeur mᵢ, n fois afin que l'entrée soit la même pour tous les chiffres de N.

Si en revanche n-p-k-2 est négatif, ceci correspond à un retard du calcul de mᵢ, on rajoute donc de la latence.

### Latence

Lorsque la condition p+k+2 ≤ n n'est pas réalisée, ceci signifie que les sorties ont du retard sur les entrées, des coups d'attente (latence) pour synchroniser les données sont rajoutées.

Pendant les coups de latence, les entrées sont bloquées (au sens où on prend comme nouvelle entrée 0 (pour tenir compte de la dernière retenue de S), le calcul se poursuivant pour les données déjà entrées.

Dans ce cas (p+k+2>n), on définit nₗₐₜₖ=p+k+2-n. Cette grandeur représente le nombre de coups de latence à effectuer avant de présenter de nouvelles entrées au multiplieur-additionneur.

Dès que mᵢ est déterminé, il est utilisé comme entrée de la multiplication-addition. S₀ quant à lui est forcément déterminé avant mᵢ et doit être stocké (ainsi que S₁, S₂ ...) jusqu'à ce que mᵢ soit calculé.

Pour cette raison, on rajoute des registres afin de retarder l'arrivée des résultats à l'entrée du multiplieur-additionneur.

### Registres supplémentaires

Deux cas sont distingués. En effet, selon que p+k+2 est plus grand ou plus petit que n, le nombre et l'utilisation des registres ajoutés ne sont cependant pas les mêmes.

### Cas 1 : p+k+2 ≤ n

Dans ce cas, l'ensemble S₀ et mᵢ est déterminé avant la fin de parcours des chiffres des données.

Pour mᵢ, voir la section sur le rebouclage, on utilise la méthode décrite ci-dessus dans la section de rebouclage.

Pour S₀, on retarde son arrivée à l'entrée du multiplieur additionneur par le rajout de registres à décalage.

On définit alors n_{reg} par n_{reg}=n-p-1. Cette quantité correspond au nombre de registres à rajouter pour synchroniser l'arrivée du chiffre de poids faible du résultat d'une multiplication-addition avec les données de poids faible de la suivante.

### Cas 2 : p+k+2 > n

Deux sous cas selon que p est ou non plus grand que n, sont distingués. En fait, quelque soit la valeur de p, mᵢ sera déterminé après S₀.

On retarde donc l'arrivée de S₀ à l'entrée du multiplieur par le rajout de registres. Ce nombre de registres ne dépendra donc que de k, la profondeur du pipeline de l'opérateur multiplication partie basse.

On définit donc dans ce cas, n_{regk}=k+1 le nombre de registres à rajouter pour retarder l'arrivée de S₀ à l'entrée du multiplieur.

### Passage de (2) à (1)

On s'intéresse ici au passage de (2) à (1). Si il n'y a pas de mᵢ à déterminer, il faut en revanche tenir compte du décalage (division par r).

Comme précédemment, on synchronise l'arrivée des résultats avec l'entrée de nouvelles données. Ici, seule la quantité p est importante, mᵢ n'ayant pas besoin d'être déterminé, k n'intervient pas.

En revanche, on prend en compte le décalage (ie : considérer t₀ comme chiffre de poids faible et non pas t₋₁ qui est nul). Ceci peut être vu comme un niveau de pipeline supplémentaire.

### Registres supplémentaires et latence

On distingue donc comme précédemment, deux cas, selon que p+2 est plus grand que n ou pas.

### Cas 1 : p+2 ≤ n

Dans ce cas, t₀ est disponible avant la fin de parcours des chiffres des données. On rajoute donc des registres pour prendre en compte le retard. On définit alors, n'_{reg}=n-p-2 qui indique le nombre de registre à rajouter pour prendre en compte le retard.

### Cas 2 p+2> n

Dans ce cas, t₀ est disponible après le parcours des chiffres des données. On retarde donc l'entrée des nouvelles données. Ceci se fait comme précédemment en rajoutant des coups d'attente (latence). On définit n'ₗₐₜ=p+2-n qui représente le nombre de coups d'attente à réaliser.

### Additionneur supplémentaire et rebouclage

La détermination de tₙ se fait par une addition de Sₙ₊₁ avec c, Sₙ₊₁ ≤ 2 et c ≤ 1. Pour cela on prévoit un additionneur (de la logique) 2 bits + 1 bit vers 2 bits (tₙ ≤ 3) (composant désigné 4).

Dans le calcul de T, le décalage permet d'économiser l'utilisation d'un registre. Celui-ci est utilisé pour le stockage de Sₙ₊₁. Cette valeur est stockée jusqu'à ce que c soit déterminé, puis l'addition des deux est réalisée libérant ainsi le registre de stockage de Sₙ₊₁.

On définit donc n_{reb}=n+nₗₐₜₖ-1 qui est le nombre de rebouclage nécessaire de Sₙ₊₁.

### Paramètres de correction

Le dessin final du composant dépend notamment des profondeurs de pipeline p et k ainsi que du nombre de chiffres n des entiers longs pour lequel il est initialement prévu. En particulier, le nombre de registres à rajouter est un point délicat puisqu'il n'est pas le même suivant que l'on se trouve dans le cas du passage de (1) à (2) ou dans le passage de (2) à (1).

Le tableau 1 de synthèse qui suit lie les quantités p, k et n aux paramètres de correction précédemment définis.

**Tableau 1**

| | p+k+2 ≤ n (⇒ p+2 ≤ n) | p+k+2 > n | |
|---|---|---|---|
| | | p+2 ≤ n | p+2 > n |
| n'_{reg} | n-p-2 | n-p-2 | 0 |
| n'ₗₐₜ | 0 | 0 | p+2-n |
| n_{reg} | n-p-1 | k+1 | |
| nₗₐₜₖ | 0 | p+k+2-n | |
| n_{rebk} | n-p-k-2 | 0 | |
| n_{reb} | n+nₗₐₜₖ-1=n-1 | n+nₗₐₜₖ-1=p+k+1 | |

En pratique le nombre de registres à rajouter est défini par : n_{reg-max}=max(n_{reg,}n_{reg}) et est égal à n-p-1 si p+k+2 ≤ n et sinon k+1. En particulier, n_{reg-max} est supérieur ou égal à 1.

Les étapes nécessitant moins de registres sont effectuées en raccourcissant la chaîne des registres par le rajout de multiplexeurs.

### Séquencement décrit à la figure 2

Un exemple de séquencement des opérations est décrit en relation avec la figure 2. On adopte comme convention de fixer les états des multiplexeurs à la fin du coup d'horloge en cours pour commander le coup d'horloge suivant.

### Comportement général des multiplexeurs

La latence intervient ici. En effet, selon qu'il y a de la latence ou non, les changements d'état ne se font pas aux même moments.

Il est cependant possible d'utiliser les paramètres de correction de latence du circuit (n'ₗₐₜ et nₗₐₜₖ) pour définir un comportement général des multiplexeurs.

En effet, on peut supposer que |B|=n+1+ n'ₗₐₜ avec les n'ₗₐₜ premiers chiffres de B nuls. (Sauf évidemment pour le calcul de a₀B).

De même, on peut supposer que |N|=n+1+ nₗₐₜₖ avec les nₗₐₜₖ premiers chiffres de N nuls.

De plus, on isole le cas particulier du premier calcul a₀B pour lequel on ne prend pas en compte la latence (les n'ₗₐₜ premiers chiffres nuls de B).

Enfin, passé ce cas particulier, on remarque que les données présentées successivement en entrée du multiplieur-additionneur peuvent être regroupées par tranches de 2n+2+ n'ₗₐₜ + nₗₐₜₖ données. Les nₗₐₜₖ +n+1 premières correspondent aux données mᵢ et Nⱼ. Les n'ₗₐₜ +n+1 dernières correspondent aux données aᵢ et bⱼ.

On aura donc un comportement cyclique des multiplexeurs, de période 2n+2+n'ₗₐₜ+nₗₐₜₖ

### mux 1

mux1 est un multiplexeur à deux états symbolisant quel type d'entrées doit être pris en compte au niveau du multiplieur-additionneur. Les deux états sont :
- 0 : x=aᵢ et y=bⱼ sont pris comme entrées du multiplieur-additionneur.
- 1 : x=mᵢ et y=Nⱼ sont pris comme entrées du multiplieur-additionneur.

L'utilisation des constantes n'ₗₐₜ et nₗₐₜₖ permet notamment de vérifier que le changement d'état intervient lorsque tous les chiffres de B (ou de N) ont été parcourus.

Pour a₀ on ne prend pas en compte les n'ₗₐₜ premiers chiffres nuls. Le calcul commence directement par les données a₀b_{n'lat}.

Ainsi mux1, initialement à 0 (reset), reste dans cet état pendant les n premiers coups d'horloge, et passe dans l'état 1 au n+1^{ème} coup.

A la fin de ce n+1^{ème} coup, les données présentées en entrée du multiplieur-additionneur sont a₀ et bₙ, tous les chiffres de B auront donc été parcourus.

mux1 est à 1 à la fin de ce même coup d'horloge, donc à la fin du coup d'horloge suivant, m₁ et N₀ seront présentés en entrée du multiplieur-additionneur.

Le comportement général de mux1 en fonction du coup d'horloge clock peut être résumé par les étapes suivantes :
Si clock<n+1, alors mux1=0
Sinon :
Si (clock-(n+1) mod (2n+2+ nₗₐₜₖ + n'ₗₐₜ ))<n+1+ nₗₐₜₖ, alors mux1=1
Sinon mux1=0

### m ux2

mux2 est un multiplexeur à deux états symbolisant à quel moment doit être fait l'addition sₙ₊₂+c. On rappelle que sₙ₊₂ est stocké dans Stab₁.

De plus, lorsque cette addition est réalisée, la retenue de l'additionneur trois entrées doit être initialisée à 0 puisque une nouvelle addition commence.

Les deux états sont :
- 0 : L'addition sₙ₊₁+c ne peut être effectuée, c n'est pas encore déterminé.
- 1 : Les entrées sₙ₊₁ et c sont positionnées pour être ajoutées au coup d'horloge suivant, la retenue de l'additionneur trois entrées est initialisée à 0.

Cette addition est réalisée une seule fois par itération principale (boucle sur i), elle se situe dans la deuxième boucle sur les chiffres de N.

Ceci signifie que mux2 n'est jamais deux fois de suite dans l'état 1.

De plus, cette addition porte sur les valeurs du registre Stab1, donc la profondeur de pipeline p intervient pour déterminer le comportement de mux2.

Le chiffre de poids faible (s₀) du produit a₀×b₀ est dans le registre de sortie de l'additionneur à clock p+3 (=1(load)+(p+1)(s₀ dans LSB)+1(s₀ dans registre de sortie de l'additionneur)).

sₙ est donc dans ce même registre à clock p+3+n. Comme sₙ correspond au chiffre de poids faible de a₀ × bₙ, les entrées suivantes sont donc les chiffres de N et m₁.

Or l'addition doit être réalisée lorsque tₙ₋₁ se trouve dans le registre de sortie de l'additionneur puisqu'à ce moment on dispose de la bonne valeur de carry à ajouter à sₙ₊₁ pour déterminer tₙ.

mux2 doit donc être dans l'état 1 lorsque tₙ₋₁ se trouve dans le registre de sortie de l'additionneur, c'est à dire au coup d'horloge p+3+n+nₗₐₜₖ+n+1=p+2n+nₗₐₜₖ+4. Il ne faut pas oublier qu'avec le décalage, tₙ₋₁ correspond au calcul de m₁×Nₙ.

Par périodicité, on peut décrire le comportement général de mux2.
Si clock = p+2n+4+nₗₐₜₖ mod 2n+2+ nₗₐₜₖ + n'ₗₐₜ, alors mux2=1
Sinon mux2=0

### m ux3

Lors de la boucle sur les chiffres de N, un décalage à droite doit être effectué sur les chiffres de la sortie pour tenir compte de la division par r. mux3 est un multiplexeur à deux états symbolisant à quel moment on effectue le décalage (modélisé par un saut de registre). Les deux états sont :
- 0 : Le décalage n'est pas effectué.
- 1 : Le décalage est effectué.

Ce décalage d'indice est réalisé en hardware par le saut d'un registre.

Le décalage intervient lorsque la donnée sₙ₊₁ est présente dans le registre Stab1. En effet, à cet instant, le registre S de l'additionneur contient, suivant la valeur de nₗₐₜₖ, soit 0 (résultat d'un coup de latence), soit la valeur de t₀. t₀ ayant un temps de retard par rapport à la multiplication classique (s₀), il doit alors sauter un registre pour rattraper ce temps de retard. Ce décalage doit donc être effectué jusqu'à ce que tous les chiffres (latence comprise) de T, jusqu'à tₙ₋₁, soient déterminés. En effet, lorsque tₙ₋₁ est déterminé (ie : dans le registre S de l'additionneur), au coup d'horloge suivant, tₙ est déterminé dans Stab1 par addition de c avec sₙ₊₁, et tₙ₋₁ se trouve dans le registre Stab2. Le décalage prend alors fin, les données tₙ₋₁ et tₙ étant de nouveau dans deux registres successifs, mux3 reste donc dans l'état 1 durant n+ nₗₐₜₖ =n_{reb} +1 coup.

Comme nous l'avons dit précédemment, le décalage correspond au saut du registre Stab1 qui est alors utilisé pour le rebouclage de sₙ₊₁. Le rebouclage de sₙ₊₁ intervient donc au même moment que le décalage. Donc le changement d'état de mux3 de 0 à 1 indique également qu'il faut reboucler la valeur sₙ₊₁ dans le registre Stab1. Ce rebouclage a lieu n_{reb} fois.

Initialement, mux3 est dans l'état 0 (multiplication classique). Il passe à 1 lorsque sₙ₊₁ est dans le registre Stab1. Or sₙ est dans S au coup d'horloge p+3+n (cf : comportement de mux2). Donc sₙ₊₁ est dans ce même registre au coup p+n+4, et dans Stab1 au coup suivant : p+n+5.

Par périodicité, on déduit le comportement général de mux3 :
Si clock<p+n+5, alors mux3=0
Sinon :
Si (clock-(p+n+5) mod (2n+2+ nₗₐₜₖ + n'ₗₐₜ))<n_{reb} +1, alors mux3=1
Sinon mux3=0

La remarque précédente permet de définir et de décrire la commande reb.

### Commande reb

Cette commande représente les instants pour lesquels sₙ₊₁ doit être rebouclé dans le registre Stab1.

Les deux états sont :
- 0 : pas de rebouclage
- 1 : rebouclage

Le comportement de reb est décrit en même temps que celui de mux3. On en déduit donc :
Si clock<p+n+5, alors reb=0
Sinon :
Si (clock-(p+n+5) mod (2n+2+ nₗₐₜₖ + n'ₗₐₜₖ))<n_{reb}, alors reb=1
Sinon reb=0

### m ux4

mux4 est un multiplexeur à deux états qui fait parti de la barrière de registres.

Dans les cas où ce multiplexeur est présent, il indique s'il faut utiliser n'_{reg} ou n_{regk} registres. Les deux états sont :
- 0 : Utilisation de la totalité des registres (correspond à la multiplication (2)).
- 1 : Utilisation de n'_{reg} registres (correspond à la multiplication (1)).

mux4 doit être dans l'état 1 lorsque t₀ est déterminé dans S. On a vu (cf : mux3) que sₙ₊₁ est présent dans S à clock=p+n+4, donc nₗₐₜₖ +1 coups d'horloge après, c'est à dire à clock=p+n+5+ nₗₐₜₖ, t₀ est dans S. mux4 doit rester à 1 jusqu'à ce que tₙ se trouve dans Stab1 soit durant n+1 coups d'horloge.

Par périodicité, on déduit un comportement général de mux4 :
Si clock<p+n+5+ nₗₐₜₖ, alors mux4=0
Sinon :
Si (clock-(p+n+5+ nₗₐₜₖ) mod (2n+2+ nₗₐₜₖ +n'ₗₐₜ))<n+1, alors mux4=1
Sinon mux4=0

### Commande rebₖ

La commande rebₖ indique à quel moment il faut reboucler la valeur de mᵢ dans le registre de sortie du multiplieur partie basse.

Les deux états sont :
- 0 : pas de rebouclage
- 1 : rebouclage

Initialement, rebₖ =0.

m₁ est déterminé (ie : présent dans le registre de sortie du multiplieur partie basse) à la fin du coup d'horloge clock=p+k+4. En effet, m₁ est déterminé à l'aide de s₀ qui est lui même présent dans le registre S à la fin du coup d'horloge clock=p+3 (cf : mux2). Il sert donc d'entrée au multiplieur partie basse qui donne le résultat k+1 coups d'horloge après, soit à clock=p+k+4.

Il faut donc reboucler cette valeur à partir de ce moment là, au moins n+1 fois afin que cette entrée soit la même pour tous les chiffres de N. Il faut également tenir compte de la valeur de n_{rebk} qui est le nombre de rebouclages nécessaires de m₁ dans le cas où m₁ est déterminé avant le parcours de tous les chiffres de B.

Le nombre de rebouclage total de m₁ est donc : n+1+n_{rebk}.

Par périodicité, on en déduit le comportement général de rebₖ :
Si clock<p+n+4, alors rebₖ=0
Sinon :
Si (clock-(p+n+4) mod (2n+2+ nₗₐₜₖ + n'ₗₐₜ))<n+1+n_{rebk}, alors rebₖ =1
Sinon rebₖ=0.

## Revendications

1. Dispositif de mise en oeuvre de la multiplication modulaire de Montgomery, **caractérisé en ce qu'**il comporte au moins une cellule de calcul comportant un multiplieur-additionneur (1) comportant p couples logique-registre pipeliné, recevant plusieurs chiffres à additionner et à multiplier, au moins deux sorties correspondant au poids faible et au poids fort, un additionneur (2) recevant les deux sorties du multiplieur-additionneur, le nombre p étant choisi de façon telle que la fréquence maximale F1 max du multiplieur-additionneur soit supérieure ou égale à la fréquence maximale F2max de l'additionneur, et **en ce qu'**il comporte un multiplieur (3) partie basse dont les entrées correspondent à la sortie LSB de l'additionneur et à une constante précalculée, ledit multiplieur étant pipeliné sur une profondeur k, avec k<p, et dont la sortie est couplé avec une des entrées du multiplieur-additionneur.

2. Dispositif selon la revendication 1, **caractérisé en ce que** la fréquence maximale F1max du multiplieur-additionneur est sensiblement égale à la fréquence maximale F2max de l'additionneur.

3. Dispositif selon l'une des revendications 1 ou 2, **caractérisé en ce qu'**il comporte un ensemble de registres et de multiplexeurs, adapté à retarder l'arrivée des données dans le multiplieur-additionneur.

4. Dispositif selon l'une des revendications 1 à 2, **caractérisé en ce qu'**il comporte un additionneur complémentaire 2 bits + 1 bit vers 2 bits.

## Claims

1. A device for implementing modular Montgomery multiplication, **characterised in that** it comprises at least one calculation cell comprising a multiplier-adder (1) comprising p pipelined logic-register pairs receiving several digits to be added and multiplied, at least two outputs corresponding to low order and high order, an adder (2) receiving the two outputs of the multiplier-adder, the number p being selected so that the maximum frequency F1max of the multiplier-adder is greater than or equal to the maximum frequency F2max of the adder, and **in that** it includes a low end multiplier (3), the inputs of which correspond to the LSB output of the adder and a pre-calculated constant, said multiplier being pipelined at a depth k, where k < p, and wherein the output is paired with one of the inputs of the multiplier-adder.

2. The device according to claim 1, **characterised in that** the maximum frequency F1max of the multiplier-adder is substantially equal to the maximum frequency F2max of the adder.

3. The device according to claim 1 or 2, **characterised in that** it comprises a set of registers and multiplexers designed to delay the arrival of the data in the multiplier-adder.

4. The system according to claim 1 or 2, **characterised in that** it includes a complementary 2 bit + 1 bit to 2 bit adder.

## Patentansprüche

1. Vorrichtung zum Implementieren einer modularen Montgomery-Multiplikation, **dadurch gekennzeichnet, dass** sie wenigstens eine Rechenzelle umfasst, die einen Multiplizierer-Addierer (1) umfasst, das p pipeline-strukturierte Logikregisterpaare umfasst, die mehrere zu addierende und zu multiplizierende Ziffern empfängt, wobei wenigstens zwei Ausgänge einer niedrigen Ordnung und einer hohen Ordnung entsprechen, wobei ein Addierer (2) die beiden Ausgänge des Multiplizierers-Addierers empfängt, wobei die Zahl p so gewählt wird, dass die maximale Frequenz F1max des Multiplizierers-Addierers gleich oder größer als die maximale Frequenz F2max des Addierers ist, und **dadurch**, dass sie einen Niedrigteil-Multiplizierer (3) umfasst, dessen Eingänge dem LSB-Ausgang des Addierers und einer vorberechneten Konstante entspricht, wobei der Multiplizierer mit einer Tiefe k pipeline-strukturiert wird, wobei k < p, und wobei der Ausgang mit einem der Eingänge des Multiplizierers-Addierers gepaart wird.

2. Vorrichtung nach Anspruch 1, **dadurch gekennzeichnet, dass** die maximale Frequenz F1max des Multiplizierer-Addierers im Wesentlichen gleich der maximalen Frequenz F2max des Addierers ist.

3. Vorrichtung nach Anspruch 1 oder 2, **dadurch gekennzeichnet, dass** sie einen Satz von Registern und Multiplexern umfasst, der zum Verzögern der Ankunft der Daten in dem Multiplizierer-Addierer ausgebildet ist.

4. Vorrichtung nach Anspruch 1 oder 2, **dadurch gekennzeichnet, dass** sie einen komplementären 2 bit + 1 bit zu 2 bit Addierer aufweist.
